# EUROPÄISCHE PATENTSCHRIFT

(11) **EP 1 250 818 B1**
(45) Veröffentlichungstag und Bekanntmachung des Hinweises auf die Patenterteilung: **10.10.2007**
(21) Anmeldenummer: 01909518.1
(22) Anmeldetag: 24.01.2001
(51) Int. Cl.: H04Q 3/00

(54) **VERFAHREN ZUR ANBINDUNG VON EINHEITEN MIT GENORMTEN SCHNITTSTELLEN AN EINRICHTUNGEN EINES VERMITTLUNGSSYSTEMS**
A METHOD FOR LINKING UNITS WITH STANDARDIZED INTERFACES TO DEVICES OF A NETWORK SYSTEM
PROCEDE POUR RACCORDER DES UNITES, PRESENTANT DES INTERFACES NORMALISEES, A DES UNITES D'UN SYSTEME DE TRANSMISSION

(30) Priorität: 26.01.2000 DE 10003272
(43) Veröffentlichungstag der Anmeldung: 23.10.2002
(73) Patentinhaber: NOKIA SIEMENS NETWORKS GMBH & CO. KG, 81541 München (DE)
(72) Erfinder: LÖBIG, Norbert, 64291 Darmstadt (DE)
(86) Internationale Anmeldenummer: PCT/DE2001/000274
(87) Internationale Veröffentlichungsnummer: WO 2001/056303

(56) Entgegenhaltungen:
- US-A- 6 002 689
- US-A- 6 014 437

## Beschreibung

Die Erfindung betrifft ein Verfahren und eine Netzstruktur gemäß dem Oberbegriff von Patentanspruch 1 bzw. 15.

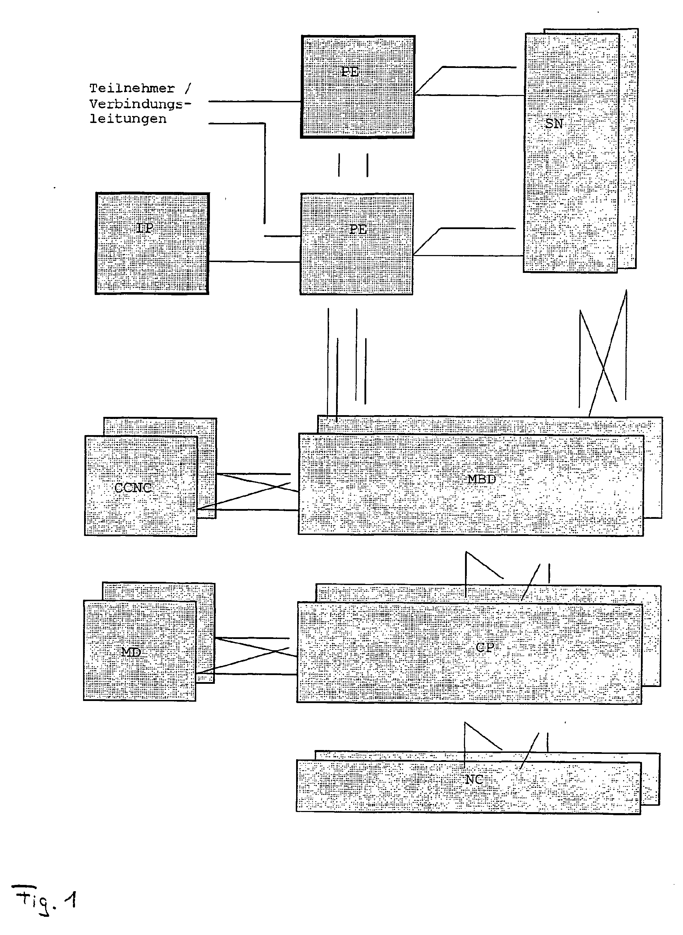

Ein Vermittlungsknoten besteht in der Regel aus peripheren Einrichtungen PE (Anschlußeinrichtungen für Teilnehmer oder Leitungen), einer zentralen Rechnerplattform CP, einer Nachrichtenverteileinrichtung MB und weiteren, zentralen Einheiten (Koppelfeld SN, Protokollabschlußeinrichtungen CCNC (z. B. #7), Hintergrundspeicher MD, Bedieneinrichtungen NC). Eine entsprechende Konfiguration ist in Fig. 1 aufgezeigt.

Die peripheren Einrichtungen erfüllen wesentliche, i. a. an die Sprachkanäle der peripheren Einrichtung gebundene vermittlungstechnische Aufgaben. Sie enthalten daher vermittlungstechnische, betriebstechnische und administrative Programme sowie die der Einrichtung zugehörigen Dateninformationen bezüglich Anschlußlage, Signalisierung, Berechtigungen, Rufnummern, individuelle Charakteristika von Verbindungsleitungen und Teilnehmeranschlüssen sowie Dateninformationen bezüglich des Ausbauzustandes und der Konfiguration der peripheren Einrichtung. Die zentrale Rechnerplattform dient der koordinierenden Steuerung des Verbindungsauf- und -abbaus sowie der Reaktionen auf administrative und fehlerbedingte Konfigurationsveränderungen.

Die peripheren Einrichtungen sind über das Nachrichtenverteilsystem untereinander und mit der gemeinsamen zentralen Rechnerplattform verbunden. Die weiteren zentralen Systemkomponenten stellen dem Vermittlungssystem Spezialfunktionen z.B. für die Durchschaltung der Sprachkanäle, die Bearbeitung der Signalisierungsprotokolle,die Realisierung der Betreiberschnittstelle oder für die Speicherung von Massendaten zur Verfügung.

Aus Gründen der Ausfallsicherheit sind die zentralen Komponenten eines Vermittlungssystems redundant (z.B. gedoppelt) ausgelegt. Die peripheren Einrichtungen können entweder nicht redundant ausgebildet sein oder im Falle von verschärften Ausfallanforderungen (z. B. Retten stabiler Verbindungen über den Ausfall einer peripheren Einrichtung hinaus) Redundanz besitzen.

Werden Signalisierungsdaten und Sprachdaten disassoziiert auf getrennten Wegen geführt und haben die peripheren Einrichtungen nur noch die Aufgabe der Protokollverarbeitung und/oder - konversion ohne physikalische Terminierung der Sprachkanäle, so entfallen die Beschränkungen der peripheren Einrichtungen hinsichtlich Ressourcenpool und Anzahl terminierbarer Sprachkanäle. Die periphere Einrichtung wird für diesen Anwendungsfall hinsichtlich ihrer Kapazität bestimmt durch die Performanz der Prozessoren, die Größe des Speichers und die Kapazität der Nachrichtenschnittstelle.

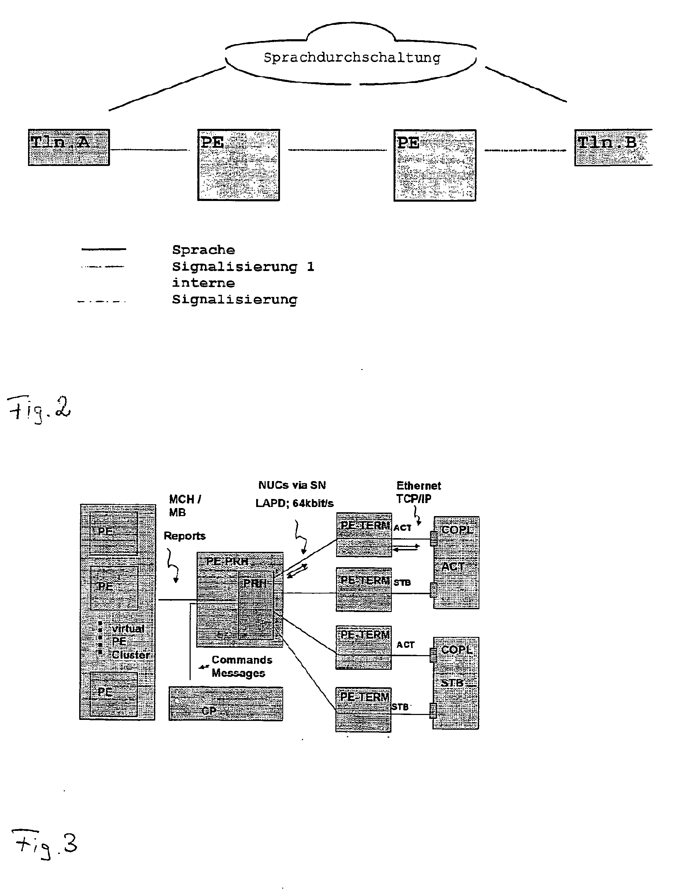

Da für die Durchschaltung der Sprache zwischen einem A-Teilnehmer und einem beliebigen B-Teilnehmer mehr als eine Richtung zur Verfügung zu stellen ist, sind damit ursprungs- und zielabhängig zwei verschiedene periphere Einrichtungen PE aus der Menge aller peripheren Einrichtungen in einen vorgegebenen Verbindungsauf- und -abbau involviert. Fig. 2 zeigt einen solchen Fall in seiner allgemeinsten Form.

Die klassische periphere Einrichtung terminiert genau die Verbindungsleitungen, für deren vermittlungstechnische Bearbeitung sie zuständig ist. Üblicherweise finden sich periphere Einrichtungen zur Terminierung von n PCM30- Strecken (z.B. n=4 für 120 Verbindungsleitungen). Wird nun die Sprache außerhalb der peripheren Einrichtung geführt, entfällt die Beschränkung auf die physikalisch vorgegebene maximale Anzahl terminierbarer Verbindungsleitungen. Für diesen Einsatzfall kann eine periphere Einrichtung gegebenenfalls mehr als 120 Verbindungen gleichzeitig bearbeiten. Dies ist beispielsweise für IP-basierte Teilnehmer am Internet der Fall, die ihren Telephoniedienst mittels Voice over IP (VoIP) unter Steuerung der Vermittlungsstelle abwickeln. Als weitere Beispiele kommen leitungsvermittelte Verbindungen in Betracht, die mittels eines Media Gateway (MG) in paketorientierte Verbindungen unter Steuerung von als Media Gateway Controller (MGC) agierenden Vermittlungsstellen umgesetzt werden müssen, oder paketbasierte (z. B. IP-basierte) Verbindungen zwischen zwei als Media Gateway Controller (MGC) agierenden Vermittlungsstellen.

In allen voranstehend genannten Fällen ist die Unterstützung des Basic Call (Call ohne Features) erforderlich. Die von den peripheren Einrichtungen generierte bzw. erwartete Zwischenamtssignalisierung (z.B.#7 Protokoll) oder Teilnehmersignalisierung (z.B. EDSS1) muß hierzu auf die für IP basierte Verbindungen definierten Standards (z.B. H.323) vor der Weiterleitung an paketbasierte Teilnehmer oder ferne MGCs umgesetzt werden. Gegebenenfalls muß zusätzlich ein im Verbindungsweg der Nutzdaten liegendes Media Gateway eingestellt werden. Dies ist ebenfalls paketbasiert (z.B. IP basiert) und wird über geeignete Protokolle (z. B. MGCP, Megaco/H.248) durch den Media Gateway Controller vorgenommen.

Die neuen Aufgaben der Ansteuerung eines Media Gateways bzw. der Konvertierung auf der Welt des Internet angepaßte Protokolle werden vorzugsweise neuen, teilzentralen Einheiten der Vermittlungsstelle zugedacht. Derartige teilzentrale Einheiten sind multifunktionale Rechnerplattformen mit kommerzieller (d.h. am Markt erhältlicher) Hardware und betriebssystemnaher Software sowie mit genormten Schnittstellen (vorzugsweise Ethernet mit TCP/UDP und IP, aber auch E1/T1 auf Basis PCM/SDH-Technik mit HDLC/LAPD). Neben den genannten Aufgaben können diese Rechnerplattformen eine Vielzahl neuer, durch die Evolution der Vermittlungsstelle zu einem Call Feature Server sich ergebende Aufgaben abdecken. (Z. B. Internet Supplementary Services wie Click-to-Dial (CtD)). Die genannten kommerziellen Plattformen sind mithin die Schnittstellen des als Call Feature Server agierenden Vermittlungssystems in Richtung Paketnetz/Internet (paket/IP-basierte Tln., MGCs, MGs, Gatekeepers, AAA Server usw.) und stellen paketnetz/internetrelevante Funktionen des Vermittlungssystems zur Verfügung.

Bezüglich der Einbindung der genannten kommerziellen Plattformen stellt sich nun folgendes technische Problem:

Bei der Einbindung einer Plattform über genormte Schnittstellen der LAN-, PCM-, SDH- Technik in ein Vermittlungssystem sind eine Vielzahl von Forderungen zu berücksichtigen:

So sollte die Vielzahl peripherer Einrichtungen einer Vermittlungsstelle genauso direkten Kommunikationszugriff auf die einzubindene Plattform haben wie alle zentralen Einrichtungen der Vermittlungsstelle. Dies bedeutet, daß kein Nachrichtentransfer über Einheiten außerhalb des Nachrichtenverteilsystems vorgenommen werden sollte. Ebenso sollte die Performanz der Anbindung den jeweiligen Anforderungen der Applikationen jederzeit anpaßbar sein (Skalierbarkeit) sowie die physikalischen Schnittstellen der kommerziellen Plattform im Hinblick auf wenige, gut ausgelastete physikalische Schnittstellen ökonomisch nutzbar sein. Gleichfalls müssen wesensfremde Anwendungen auf getrennten physikalischen Wegen angebunden werden können (Unabhängigkeit von Anwendungen mit unterschiedlichen Anforderungen an Nachrichtenlänge und Delay), eine Mehrzahl kommerzieller Plattformen zugleich angeschlossen werden können (Erhöhung der Performanz und Unterstützung unterschiedlicher Interface-Konfigurationen der kommerziellen Plattform), sowie Ausfälle der Anbindung jederzeit alarmierbar sein (Erhalt der Zuverlässigkeit und der Maintenance Qualität einer Vermittlungsstelle) und Teilausfälle der Anbindung nicht zum Verlust der Funktion führen (Redundanz).

Gemäß dem Stand der Technik wird ein ähnliches Anbindungsproblem zwischen einer Vermittlungsstelle und einer Service Plattform im Rahmen der Konzepte des Intelligent Network (IN) gelöst. Dort kann die HW-Plattform des Service Control Points (SCP) als an eine Vermittlungsstelle anzubindende Plattform angesehen werden.

SCPs stellen vermittlungsstellenübergreifende Funktionalität der Intelligent Networks (IN) zur Verfügung, die hochperformant, im Extremfall sogar pro Basic Call (z. B. Rufnummernumsetzung) genutzt werden kann. SCPs sind eingebunden in das i.a. #7-basierte Signalisierungsnetz konventioneller, leitungsvermittelnder Netze. Sie sind folglich über genormte Schnittstellen an die Vermittlungsgstellen angebunden und erfüllen ferner die von konventionellen Vermittlungssystemen erwarteten hohen Verfügbarkeitsanforderungen.

Verglichen mit dem im vorliegenden Fall zu lösenden technischen Problem ergeben sich die im folgenden aufgezeigten unüberwindbaren Schwierigkeiten. Als Basis der Erweiterung von konventionellen Vermittlungsstellen in Richtung paketorientierter vermittlungstechnischer Funktionen ist das SCP Konzept daher ungeeignet.

So besitzen SCPs nur eingeschränkte Möglichkeiten der proprietären/ herstellerspezifischen Kommunikation mit den Einrichtungen der Vermittlungsstelle, da sie auf ein vollständig definiertes genormtes Protokoll (INAP/#7) ohne hinreichend weitreichende Gestaltungsmöglichkeit für die Belange einer Kommunikation mit Teileinrichtungen eines Vermittlungssystems aufsetzen. Sie sind ferner übergeordnete Einheiten, die nicht nur eine einzige Vermittlungsstelle betreuen und sind nicht auf einer offenen kommerziellen Plattform realisiert, auf der vermittlungstechnische Teilfunktionen einer Vermittlungsstelle frei implementiert werden können. Darüberhinaus unterstützen SCPs Dienste, nicht jedoch komplexe Steuerungsvorgänge des Netzes, wie z. B. Steuerung von Media Gateways (MGs) per Kontrollprotokoll (MGCP, Megagco). SCPs haben keine Kommunikationsmöglichkeit mit den Einrichtungen des Vermittlungssystems zur Ansteuerung von Einrichtungen außerhalb der Vermittlungsstelle (Einstellung des MG). Letztlich bieten SCPs ebensowenig Protokollkonverterfunktionen und Möglichkeiten der Kommunikation mit Teilnehmern der Vermittlungsstelle, wie es für die im vorliegenden Fall anzubindende Plattform erforderlich ist. Die Anbindung von SCPs erfolgt derzeit auf Basis Time Division Multiplex, nicht jedoch via Ethernet.

Die US 6 002 689 A beschreibt eine Netzstruktur zum Einbinden einer Vielzahl von Netzen veschiedener Formate, wobei eine Anpassungseinheit zum Anpassen und Umsetzen von Formaten vorgesehen ist.

Der Erfindung liegt die Aufgabe zugrunde, einen Weg aufzuzeigen, wie eine Rechnerplattform über genormte Schnittstellen in ein Vermittlungssystem ohne größeren HW-Aufwand eingebunden werden kann.

Die Erfindung wird ausgehend vom Oberbegriff des Patentanspruch 1 durch die im Kennzeichen angegebenen Merkmale gelöst.

Vorteilhaft an der Erfindung ist insbesondere, daß bei der Kommunikation eine nachrichtenbasierte Konzentration auf die Vermittlungsbandbreite oder einem Vielfachen davon erfolgt, und eine leitungsbasierte Konzentration auf die Bandbreite einer der peripheren Einrichtungen, die mindestens eine Schnittstelle der zugeordneten Steuereinheit terminiert. Hierbei ist letztere als Plattform anzusehen. Die nachrichtenbasierte Konzentration wird dabei via internem Nachrichtenverteilsystem der Vermittlungsstelle auf eine Mehrzahl der peripheren Einrichtungen mit Protokollabschlußkapazität vorgenommen. Die leitungsbasierte Konzentration wird via Durchschaltung von Nutzkanälen einer Mehrzahl von peripheren Einrichtungen mit Protokollabschlußkapazität auf mindestens eine periphere Einrichtung mit physikalischer Schnittstelle zur Steuereinheit vorgenommen.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die typische Konfiguration eines Vermittlungssystems
- Fig 2: die Führung getrennter Wege von Sprache und Signalisierung,
- Fig 3: die Kommunikation PE/CP <-> COPL in Cluster-Konfiguration,
- Fig 4: die Kommunikation PE/CP <-> COPL in mikrosynchroner
- Fig 5: die Kommunikation CP <-> COPL in Cluster- Konfiguration über mehrere Wege,
- Fig 6: die Kommunikation PE/CP <-> COPL in Cluster-Konfiguration via gedoppelte PE.

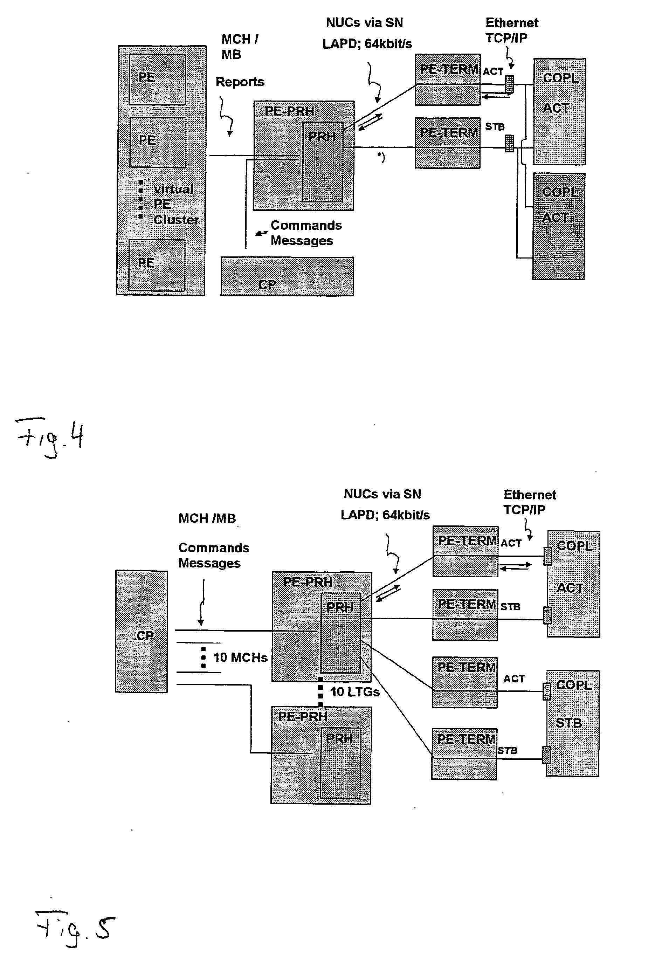

In den Figuren 3 bis 6 sind insgesamt 4 Ausführungsbeispiele aufgezeigt, in denen aufgezeigt ist, wie die Kommunikation zwischen einer vermittlungstechnische Funktionen ausführenden Plattform COPL als Informationsquelle/senke und weiteren Einrichtungen des Vermittlungssystems erfolgt:

Allen 4 Ausführungsbeispielen gemeinsam ist, daß für jede an der Kommunikation mit der Plattform COPL als Informationsquelle beteiligten Einrichtungen eines Vermittlungssystems die administrative Zuordnung von mindestens einer peripheren Einrichtung mit Protokollabschlußfunktionalität (Periphere Einrichtung mit HDLC/LAPD Funktionaliät, kurz PE-PRH) erfolgt. Als Kommunikationspartner der Plattform kommen insbesondere periphere Einrichtungen PE und die Koordinationsprozessorplattform CP des Vermittlungssystems in Frage. Die den Informationsquellen zugeordnenten peripheren Einrichtungen PE-PRH beschreiben den mindestens einen in Richtung der Plattform COPL zu nutzenden Kommunikationsweg. Die administrative Zuordnung kann statisch als feste Zuordnung implementiert werden, sie kann aber ebenso als Default-Zuordnung für den Systemanlauf dienen, die dynamisch nach Verfügbarkeit des Kommunikationszugriffes auf die Plattform COPL und nach Belastung der Kommunikationswege der COPL-Anbindung durch das System selbständig geändert werden kann. Die administrative Zuordnung kann im Falle einer voll dynamischen Zuordnung auch gänzlich entfallen.

Die Kommunikation zwischen peripheren Einrichtungen und Koordinationsprozessor CP auf der einen Seite und der Rechnerplattform COPL auf der anderen Seite erfolgt über das interne Nachrichtenverteilsystem MBD der Vermittlungsstelle über mindestens eine der einer Informationsquelle zugeordneten peripheren Einrichtung mit Protokollabschluß PE-PRH. Dort wird eine erste Protokollumsetzung auf ein standardisiertes gesichertes Nachrichtenübertragunsgverfahren durchgeführt (z. B. HDLC, LAPD). Die entstehenden Nachrichten werden in einem Basiskanal des Vermittlungssystems der Bandbreite nx64 kbit/s in Richtung Hauptkoppelnetz SN weitergeleitet. Umgekehrt werden von der Plattform COPL generierte Nachrichten in einem ebensolchen Basiskanal über das Haupkoppelnetz SN an die periphere Einrichtung mit Protokollabschluß herangeführt und dort auf das Nachrichtenformat des internen Nachrichtenverteilsystems MBD der Vermittlungsstelle umgesetzt und in Richtung der Zieladresse, also der von der Applikation auf der Plattform COPL adressierten peripheren oder zentralen Einrichtung des Vermittlungssystems weitergeleitet.

Die voranstehend beschriebenen Basiskanäle verschiedener peripherer Einrichtungen mit Protokollabschluß werden als Festverbindung (Nailed-Up Connection NUC) auf periphere Einrichtungen mit Terminierungsfunktion PE-TERM durchgeschaltet.

Hierdurch erfolgt eine Leitungskonzentration auf wenige physikalische Schnittstellen (z. B. Ethernet mit TCP/IP) zur Plattform COPL. Die genannten Festverbindungen NUC werden bereits vor der vermittlungstechnischen Freigabe im Hochlauf des Vermittlungssystems geschaltet, wodurch eine im Rahmen des Systemhochlaufs mögliche erhöhte Call Failure Rate auf Grund noch nicht verfügbarer Kommunikation mit der Plattform COPL vermieden werden kann.

In der peripheren Einrichtung mit Terminierungsfunktion PE-TERM erfolgt die Umsetztung auf das COPL-seitig unterstützte Protokoll (z. B. TCP/IP). Hierzu werden die auf den mehreren Basiskanälen (z. B. 120 x 64 kbit/s mit LAPD) herangeführten Nachrichten zur Ausgabe an die Plattform COPL von dem Sprachkanal-Interface der Terminierungsfunktion PE-TERM abgegriffen und auf das in Richtung der Plattform COPL zu verwendendeten Protokolles umgesetzt, sofern dies erforderlich sein sollte. Sodann werden die so behandelten Nutzdaten über das physikalische Interface zur Plattform COPL hin ausgegeben. Bei einer Basisvermittlungsgranularität einer peripheren Einrichtung von 120 x 64 kbit/s kann damit eine Nettonutzdatenrate von 6-7 Mbit/s (Auslastung 0,8 Erl pro Basiskanal) auf einem physikalischen Interface zur COPL (z. B. 1x Ethernet 100BaseT oder 4 x E1) erreicht werden. Zur Bereitstellung des physikalischen Interfaces sowie zur Protokollumsetzung kann vorzugsweise eine Erweiterungsbaugruppe der peripheren Einrichtung PE-TERM verwendet werden.

Die Einrichtungen PE-PRH und PE-TERM können ausschließlich für die beschriebene Funktionalität genutzt werden. Sie können aber auch weitere vermittlungstechnische Funktionen für das Vermittlungssytem im Rahmen der Begrenzungen ihrer Ressourcen bereitstellen. Insbesondere können sie mit peripheren Einrichtungen zusammenfallen, deren Hardware zur Bereitstellung virtueller peripherer Einrichtungen dient. Die Funktionalität dieser virtuellen peripheren Einrichtungen ist in der europäischen Patentanmeldung EP 99123208.3 detailliert beschrieben.

Aus Gründen der Ausfallsicherheit können die peripheren Einrichtungen PE-PRH, PE-TERM als gedoppelte periphere Einrichtung ausgelegt sein, wie dies in Fig. 6 beispielhaft aufgezeigt ist. Ebenso wird das physikalsiche Interface zwischen der peripheren Einrichtung PE-TERM und der Plattform COPL i. a. mindestens gedoppelt ausgelegt sein. Schließlich wird die Plattform COPL selbst als Einrichtung einer Vermittlungsstelle mit teilzentralen Funktionen intern redundant ausgelegt sein. Gegenwärtig sind Plattformen COPL mit mikrosynchronem Parallelbetrieb (1 gedoppeltes Interface) und Plattformen mit Cluster-Konfiguration (mindestens 2 gedoppelte Interfaces) gebräuchlich, wie dies in den Figuren 3 und 4 aufgezeigt ist.

Sind die periheren Einrichtungen PE-PRH und PER-TERM als ungedoppelte periphere Einrichtungen ausgebildet, kann eine n:1 Redundanz der periheren Einrichtung PE-PRH im Sinne der Redundanz virtueller peripherer Einrichtungen vorgesehen werden.

Einschränkungen in der Anbindung der Plattform COPL auf Grund von Ausfall einer ungedoppelten periheren Einrichtung PE-TERM können durch gedoppelte Führung der Basiskanäle der periheren Einrichtung PE-PRH über 2 Festverbindungskanäle NUC und 2 verschiedene perihere Einrichtungen PE-TERM auf das gedoppelte physikalische Interface zur Plattform COPL vermieden werden. (Vgl. Figuren 3-6.)

Ein gedoppeltes physikalisches Interface zur Plattform COPL kann als Gesamtheit oder gegebenfalls kanalorientiert aktiv (ACT) /stand-by (STB) oder ACT/ACT im load-sharing oder broadcast Modus betrieben werden. Um die Konfiguration des Interfaces aus Sicht des Vermittlungssytems einfach zu halten, passen sich die Einheiten PE-PRH und PE-TERM jeder COPL-seitig gewünschten Betriebsweise an. Hierzu erhalten sie von Seiten der Plattform COPL entsprechende Einstellbefehle. Die Betriebsart kann während des Betriebs COPL-seitig verändert werden. Zur Überwachung der Verfügbarkeit der Kommunikationswege zur Plattform COPL wird der Layer 1 (z. B. PCM-Strecke, Ethernet), der Layer 2 (z. B. HDLC) und der Layer 3 in den Einheiten PE-PRH bzw. PE-TERM überwacht. Insbesondere wird die Verfügbarkeit der Plattform COPL durch zyklisch wiederkehrende und seitens der Plattform COPL zu beantwortende Layer 3 Test-Kommandos überwacht.

Damit die Applikationen auf den peripheren und zentralen Einrichtungen des Vermittlungssystems unabhängig von den Eigenheiten des Nachrichtetransports zur und von der Plattform COPL bleiben, werden den Applikationen entsprechende Aufrufschnittstellen (APIs) zur Verfügung gestellt. Diese APIs sind Teil von SW-Subsystemen (Transfer-User), welche die Art des Transports der Nachrichten zwischen den Einrichtungen des Vermittlungssystems und der Plattform COPL regeln. Stehen für eine Kommunikation mehrere physikalische Wege zur Verfügung, so sind diese Transfer-User Subsysteme zuständig für die Auswahl eines geeigneten Weges in Richtung Plattform COPL unter den Gesichtspunkten der Verfügbarkeit, der angemessenen Lastverteilung oder der Berücksichtigung eines zugeordneten vordefinierten Defaultweges.

Die Transfer-User peripherer Einrichtungen stehen mit einem übergeordneten Transfer-User (Central Load Distributor) auf der koordinierenden Prozessorplattform CP des Vermittlungssytems im Austausch. Der Central Load Distributor empfängt und koordiniert die Ausfall-/Wiederverfügbarkeitsmeldungen der Einrichtungen PE-PRH und PE-TERM sowie der allgemeinen Fehleranalyse- und Konfigurations-Subsyteme des Vermittlungssystems und sorgt damit dafür, daß eine die Anbindung der Plattform COPL betreffende Fehlermeldung nur dann gemeldet wird, wenn sie für das zugrunde liegende Problem ursächlich ist (Z. B. wird im Falle des PCM-Ausfalls nicht eine Mehrzahl damit einhergehender HDLC Layer 2-Ausfälle gemeldet).

Der Central Load Distributor alarmiert ferner Einschränkungen der Erreichbarkeit oder Verlust der Kommunikation mit der Plattform COPL. Insbesondere im Falle von Ausfällen von einzelnen Einrichtungen PE-PRH sorgt er bei fester Zuordnung von peripherer oder zentraler Einrichtung zu dem zu benutzenden betroffenen Kommunikationsweg durch Zuordnung einer in Betrieb befindlichen Einrichtung PE-PRH nach Gesichtspunkten der Lastverteilung für die Wiederverfügbarkeit der in den zugeordneten Einrichtungen bereitgestellten, mit der Plattform COPL zusammenwirkenden Funktionen. Mit Wiederverfügbarkeit von temporär ausgefallenen Teilen der Anbindung der Plattform COPL, zugehörigen Einrichtungen PE-PRH oder PE-TERM werden die damit wiederverfügbaren Kommunikationswege automatisch wieder in Benutzung gebracht, gegebenenfalls wird eine veränderte Zuordnung der peripheren und zentralen Einrichtungen zu den Kommunikationswegen zur Plattform COPL vorgenommen.

Fig. 3 zeigt die Kommunikation mehrerer virtueller peripherer Einrichtungen PE mit der Plattform COPL. Diese ist redundant in Cluster-Konfiguration ausgebildet, wobei die eine COPL-Hälfte einen aktiven Betriebszustand ACT und die verbleibende Hälfte einen inaktiven Betriebszustand STB (STAND BY) aufweist. Die von den virtuellen peripheren Einrichtungen PE ausgehenden Signalisierungsnachrichten werden in den peripheren Einrichtungen PE-TERM bzgl. LAPD auf Basis von 64kBit/s abgeschlossen und umgesetzt auf TCP/IP auf Basis Ethernet und der Plattform COPL zugeführt.

Fig. 4 zeigt die Kommunikation der virtuellen peripheren Einrichtungen PE mit der Plattform COPL in einer mikrosynchronen (parallelen) Betriebsweise. Hierbei werden hinter den peripheren Einrichtungen PE-TERM die Verbindungen ausgekreuzt, die beiden Hälften der Plattform COPL weisen jeweils einen aktiven Betriebszustand ACT auf.

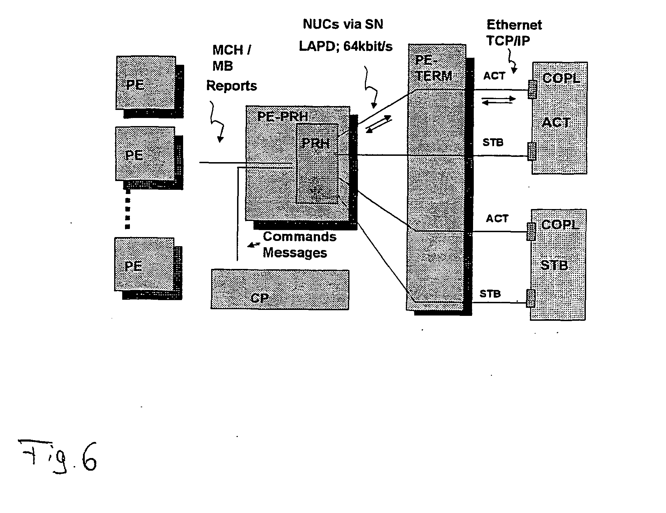

Fig. 5 zeigt die Kommunikation der zentralen Rechnerplattform CP mit der Plattform COPL. Letztere ist wiederum redundant in Cluster-Konfiguration ausgebildet, wobei die eine Hälfte einen aktiven Betriebszustand ACT und die verbleibende Hälfte einen inaktiven Betriebszustand STB (STAND BY) aufweist.

Fig. 6 zeigt letztlich die Kommunikation von peripheren Einrichtungen PE mit der Plattform COPL, wobei erstere gedoppelt ausgebildet sind. Letzere ist redundant in Cluster-Konfiguration ausgebildet, wobei die eine Hälfte einen aktiven Betriebszustand ACT und die verbleibende Hälfte einen inaktiven Betriebszustand STB (STAND BY) aufweist.

## Patentansprüche

1. Verfahren zum Einbinden von Rechnerplattformen (COPL) in ein Kommunikationssystem, das ein internes Nachrichtenverteilsystem (MBD), ein Koppelnetz (SN), mehrere interne Kommunikationseinrichtungen (PE, CP) sowie periphere Einrichtungen (PE-TERM) und periphere Einrichtungen mit Protokollabschlussfunktionalität (PE-PRH) aufweist, und in dem die Vermittlungsbandbreite die minimale Übertragungsgeschwindigkeit der Kanäle definiert, mit der Nutzinformationen über das Koppelnetz (SN) durchgeschaltet werden können, und in dem die Bandbreite der peripheren Einrichtungen die Anzahl der Nutzkanäle definiert, die von einer peripheren Einrichtung bedient werden können,
**dadurch gekennzeichnet,**
**daß** bei der Kommunikation zwischen den internen Kommunikationseinrichtungen (PE, CP) und mindestens einer Rechnerplattform (COPL) eine nachrichtenbasierte Konzentration auf die Vermittlungsbandbreite oder einem Vielfachen davon und eine leitungsbasierte Konzentration auf die Bandbreite einer der peripheren Einrichtungen erfolgt, die von mindestens einer Schnittstelle der zugeordneten Rechnerplattformen (COPL) terminiert wird.

2. Verfahren nach Anspruch 1,
**dadurch gekennzeichnet,**
**daß** die dem Vermittlungssystem zugeordneten Rechnerplattformen (COPL) über genormte Schnittstellen am Vermittlungssystem angebunden sind, die als Ethernet, ATM, PCM oder SDH Schnittstellen ausbildbar sind.

3. Verfahren nach Anspruch 1 oder 2,
**dadurch gekennzeichnet,**
**daß** die nachrichtenbasierte Konzentration via internem Nachrichtenverteilsystem (MBD) der Vermittlungsstelle auf eine Mehrzahl der peripheren Einrichtungen mit Protokollabschlußkapazität (PE-PRH) erfolgt.

4. Verfahren nach Anspruch 1 bis 3,
**dadurch gekennzeichnet,**
**daß** die leitungsbasierte Konzentration via Durchschaltung von Nutzkanälen einer Mehrzahl von peripheren Einrichtungen mit Protokollabschlußkapazität (PE-PRH) auf mindestens eine periphere Einrichtung mit physikalischer Schnittstelle zur Rechnerplattform (COPL) erfolgt.

5. Verfahren nach einem der vorstehenden Ansprüche,
**dadurch gekennzeichnet,**
**daß** eine Nutzkanaldurchschaltung als systeminterne Nailed-Up Connection im Systemhochlauf vor Freigabe der Vermittlungstechnik erfolgt.

6. Verfahren nach einem der vorstehenden Ansprüche,
**dadurch gekennzeichnet,**
**daß** die peripheren Einrichtungen mit physikalsicher Schnittstelle zur Rechnerplattform gedoppelt ausgebildet sind oder eine Mehrzahl von Schnittstellen der Rechnerplattform an unterschiedlichen nicht redundanten peripheren Einrichtungen mit physikalischer Schnittstelle angeschlossen sind.

7. Verfahren nach einem der vorstehenden Ansprüche,
**dadurch gekennzeichnet,**
**daß** die Kommunikation über fest zugeordnete periphere Einrichtungen mit Protkollabschlußkapazität oder dynamische Zuordnung nach Verfügbarkeit oder Last erfolgt.

8. Verfahren nach einem der vorstehenden Ansprüche,
**dadurch gekennzeichnet,**
**daß** die Lastverteilung in Richtung der Rechnerplattform (COPL) durch das Vermittlungssytem und in Gegenrichtung durch die Rechnerplattform (COPL) erfolgt.

9. Verfahren nach einem der vorstehenden Ansprüche,
**dadurch gekennzeichnet,**
**daß** mehrere, in logisch unterschiedlicher Betriebsweise führbare Rechnerplattformen (COPL) am gleichen Vermittlungssystem mit gegebenenfalls unterschiedlichen physikalischen Schnittstellen anbindbar sind.

10. Verfahren nach einem der vorstehenden Ansprüche,
**dadurch gekennzeichnet,**
**daß** die genormte Schnittstelle zur Rechnerplattform als PCM-Schnittstelle mit 64 kbit/s Kanälen definiert ist, welche mittels HDLC oder LAPD Protokoll gesichert sind.

11. Verfahren nach einem der Ansprüche 1-9,
**dadurch gekennzeichnet,**
**daß** die genormte Schnittstelle zur Rechnerplattform als Ethernet Schnittstelle mit TCP/IP-Protokoll definiert ist.

12. Verfahren nach einem der vorstehenden Ansprüche,
**dadurch gekennzeichnet,**
**daß** den, in den Einrichtungen des Vermittlungssystems (PE, CP) und in der Rechnerplattform (COPL) ablaufenden Applikationen die physikalischen Gegebenheiten der Anbindung durch Einführung einer spezifischen Transportschicht mit invarianter Applikationsschnittstelle verborgen bleibt.

13. Verfahren nach einem der vorstehenden Ansprüche,
**dadurch gekennzeichnet,**
**daß** periphere Einrichtungen, periphere Einrichtungen mit Protokollabschlußkapazität und periphere Einrichtungen mit physikalischer Schnittstelle hardwave-mäßig in beliebiger Kombination zusammenfallen.

14. Verfahren nach einem der vorstehenden Ansprüche,
**dadurch gekennzeichnet,**
**daß** periphere Einrichtungen mit Protokollabschlußkapazität und periphere Einrichtungen mit physikalischer Schnittstelle generell zusammenfallen und eine leitungsbasierte Konzentration entfällt.

15. Netzstruktur zum Einbinden von TDM-Kommunikationssystemen in ein IP-Netz, wobei ein TDM-Kommunikationssystem ein internes Nachrichtenverteilsystem (MBD), ein Koppelnetz (SN), mehrere interne Kommunikationseinrichtungen (PE, CP) sowie periphere Einrichtungen mit TDM-Schnittstellen (PE-TERM) und periphere Einrichtungen mit Protokollabschlussfunktionalität (PE-PRH) aufweist,
**dadurch gekennzeichnet,**
**dass** mindestens eine Rechnerplattform (COPL) vorgesehen ist, die jeweils mindestens eine IP-Schnittstelle und mindestens eine TDM-Schnittstelle aufweist,
**dass** die Rechnerplattform (COPL) über jeweils mindestens eine periphere Einrichtung (PE-TERM) an das TDM-Kommunikationssystem angeschlossen ist,
**dass** eine oder mehrere periphere Einrichtungen mit Protokollabschlussfunktionalität (PE-PRH) derart ausgestaltet sind, daß sie von den internen Kommunikationseinrichtungen (PE, CP) zu einer Rechnerplattform (COPL) gesendete Nachrichten unter Ausnutzung des internen Nachrichtenverteilsystems (MBD) zusammenfassen und in Nachrichtenkanäle eingefügen,
**dass** eine oder mehrere periphere Einrichtungen mit TDM-Schnittstellen (PE-TERM) derart ausgestaltet sind, daß sie die Nachrichtenkanäle mehrerer peripheren Einrichtungen mit Protokollabschlussfunktionalität (PE-PRH) unter Ausnutzung des Koppelnetzes (SN) zusammenfassen, und
**dass** mindestens eine periphere Einrichtung (PE-TERM) derart ausgestaltet ist, daß sie die derart zusammengefassten Nachrichtenkanäle einer der Rechnerplattformen (COPL) zuführt, die diese terminiert.

## Claims

1. Method for integrating computer platforms (COPL) into a communication system having an internal message distribution system (MBD), a switching network (SN), a number of internal communication devices (PE, CP) and peripheral devices (PE-TERM) and peripheral devices with protocol termination functionality (PE-PRH), and in which the switching bandwidth defines the minimum transmission speed of the channels with which payload information can be through-connected via the switching network (SN) and in which the bandwidth of the peripheral devices defined the number of message channels which can be operated by a peripheral device,
**characterised in that**
in the case of communication between the internal communication devices (PE, CP) and at least one computer platform (COPL) a message-based concentration on the switching bandwidth or a multiple thereof and a line-based concentration on the bandwidth of one of the peripheral devices takes place, which is terminated by at least one interface of the assigned computer platforms (COPL).

2. Method according to claim 1
**characterised in that**
the computer platforms (COPL) assigned to the switching system are connected to the switching system via standardised interfaces which can be embodied as Ethernet, ATM, PCM or SDH interfaces.

3. Method according to claim 1 or 2
**characterised in that**
the message-based concentration takes place via an internal message distribution system (MBD) of the switching centre on a plurality of peripheral devices with protocol termination capacity (PE-PRH).

4. Method according to claim 1 to 3,
**characterised in that**
the line-based concentration takes place via the through connection of message channels of a plurality of peripheral devices with protocol termination capacity (PE-PRH) on at least one peripheral device with a physical interface to the computer platform (COPL).

5. Method according to one of the preceding claims,
**characterised in that**
one message channel through-connection takes place as a system-internal nailed-up connection in the system startup prior to release of the switching technology.

6. Method according to one of the preceding claims,
**characterised in that**
the peripheral devices are embodied in double form with a physical interface to the computer platform, or a plurality of interfaces of the computer platform are connected to different non-redundant peripheral devices with a physical interface.

7. Method according to one of the preceding claims,
**characterised in that**
the communication takes place via permanently assigned peripheral devices with protocol termination capacity or dynamic assignment according to availability or load.

8. Method according to one of the preceding claims,
**characterised in that**
the load distribution in the direction of the computer platform (COPL) takes place by way of the switching system and in the opposite direction by way of the computer platform (COPL).

9. Method according to one of the preceding claims,
**characterised in that**
a number of computer platforms (COPL) operable in logically different modes can be connected to the same switching system, if appropriate with different physical interfaces.

10. Method according to one of the preceding claims,
**characterised in that**
the standardised interface to the computer platform is defined as a PCM interface with 64 kbit/s channels, which are secured by means of the HDLC or LAPD protocol.

11. Method according to one of the claims 1 to 9,
**characterised in that**
the standardised interface to the computer platform is defined as an Ethernet interface with TCP/IP protocol.

12. Method according to one of the preceding claims,
**characterised in that**
the physical characteristics of the connection remain concealed from the applications running in the devices of the switching system (PE, CP) and in the computer platform (COPL) through the introduction of a specific transport layer with an invariable application interface.

13. Method according to one of the preceding claims,
**characterised in that**
the peripheral devices, peripheral devices with protocol termination capacity and peripheral devices with a physical interface collaborate in any required combination from the hardware standpoint.

14. Method according to one of the preceding claims,
**characterised in that**
peripheral devices with protocol termination capacity and peripheral devices with a physical interface collaborate, and line-based concentration does not take place

15. Network structure for the integration of TDM communication systems into an IP network, a TDM communication system having an internal message distribution system (MBD), a switching network (SN), a number of internal communication devices (PE, CP) and peripheral devices with TDM interfaces (PE-TERM) and peripheral devices with protocol termination functionality (PE-PRH),
**characterised in that**
at least one computer platform (COPL) is provided for, in each case having at least one IP interface and at least one TDM interface, that
the computer platform (COPL) is connected to the TDM communication system via in each case at least one peripheral device (PE-TERM), that
one or more peripheral devices with protocol termination capacity (PE-PRH), equipped such that they combine messages transmitted from the internal communication devices (PE, CP) to a computer platform (COPL), using the internal message distribution system MBD, and insert them into message channels, that
one or more peripheral devices with TDM interfaces (PE-TERM) are equipped such that they combine the message channels of a number of peripheral devices with protocol termination functionality (PE-PRH), using the switching network (SN), and that at least one peripheral device (PE-TERM) is equipped such that it feeds the message channels thus combined to one of the computer channels (COPL), which terminates them.

## Revendications

1. Procédé pour intégrer des plate-formes d'ordinateurs (COPL) dans un système de communication qui comporte un système interne de distribution de messages (MBD), un réseau de couplage (SN), plusieurs dispositifs internes de communication (PE, CP) ainsi que des dispositifs périphériques (PE-TERM) et des dispositifs périphériques avec une fonctionnalité de terminaison de protocole (PE-PRH), et dans lequel la largeur de bande de commutation définit la vitesse de transmission minimale des canaux avec laquelle des informations utiles peuvent être commutées via le réseau de couplage (SN), et dans lequel la largeur de bande des dispositifs périphériques définit le nombre des canaux utiles qui peuvent être desservis par un dispositif périphérique, **caractérisé en ce qu'**il se produit, lors de la communication entre les dispositifs de communication internes (PE, CP) et au moins une plate-forme d'ordinateur (COPL), une concentration basée messages sur la largeur de bande de commutation ou un multiple de celle-ci, ainsi qu'une concentration basée lignes sur la largeur de bande de l'un des dispositifs périphériques que termine au moins une interface de la plate-forme d'ordinateur (COPL) associée.

2. Procédé selon la revendication 1, **caractérisé en ce que** les plate-formes d'ordinateurs (COPL) affectées au système de commutation sont rattachées au système de commutation via des interfaces normalisées qui peuvent être réalisées en tant qu'interfaces Ethernet, ATM, PCM ou SDH.

3. Procédé selon la revendication 1 ou 2, **caractérisé en ce que** la concentration basée messages se fait via le système interne de distribution de messages (MBD) du centre de commutation sur un grand nombre des dispositifs périphériques avec capacité de terminaison de protocole (PE-PRH).

4. Procédé selon la revendication 1 à 3, **caractérisé en ce que** la concentration basée lignes se fait via la commutation de canaux utiles d'une majorité de dispositifs périphériques avec capacité de terminaison de protocole (PE-PRH) sur au moins un dispositif périphérique avec une interface physique vers la plate-forme d'ordinateur (COPL).

5. Procédé selon l'une des revendications précédentes, **caractérisé en ce qu'**une commutation de canaux utiles se produit en tant que «Nailed-Up Connection» interne au système au lancement du système avant autorisation de la technique de commutation.

6. Procédé selon l'une des revendications précédentes, **caractérisé en ce que** les dispositifs périphériques avec interface physique vers la plate-forme d'ordinateur sont réalisés en double ou une majorité d'interfaces de la plate-forme d'ordinateur sont connectées à différents dispositifs périphériques non redondants avec une interface physique.

7. Procédé selon l'une des revendications précédentes, **caractérisé en ce que** la communication se fait par l'intermédiaire de dispositifs périphériques à affectation fixe avec capacité de terminaison de protocole ou affectation dynamique selon la disponibilité ou la charge.

8. Procédé selon l'une des revendications précédentes, **caractérisé en ce que** la répartition de la charge en direction de la plate-forme d'ordinateur (COPL) se fait par le système de commutation et, dans le sens inverse, par la plate-forme d'ordinateur (COPL).

9. Procédé selon l'une des revendications précédentes, **caractérisé en ce que** plusieurs plate-formes d'ordinateurs (COPL) exploitables en mode logiquement différent peuvent être rattachées au même système de commutation avec, le cas échéant, différentes interfaces physiques.

10. Procédé selon l'une des revendications précédentes, **caractérisé en ce que** l'interface normalisée vers la plate-forme d'ordinateur est définie en tant qu'interface PCM avec des canaux à 64 kbits/s qui sont sécurisés au moyen du protocole HDLC ou LAPD.

11. Procédé selon l'une des revendications 1 à 9, **caractérisé en ce que** l'interface normalisée vers la plate-forme d'ordinateur est définie en tant qu'interface Ethernet avec protocole TCP/IP.

12. Procédé selon l'une des revendications précédentes, **caractérisé en ce que** les conditions physiques du rattachement, par introduction d'une couche de transport spécifique avec interface d'application invariante, restent dissimulées aux applications qui tournent dans les dispositifs du système de commutation (PE, CP) et dans la plate-forme d'ordinateur (COPL).

13. Procédé selon l'une des revendications précédentes, **caractérisé en ce que** des dispositifs périphériques, des dispositifs périphériques avec capacité de terminaison de protocole et des dispositifs périphériques avec interface physique coïncident, pour ce qui est du hardware, en une combinaison quelconque.

14. Procédé selon l'une des revendications précédentes, **caractérisé en ce que** les dispositifs périphériques avec capacité de terminaison de protocole et les dispositifs périphériques avec interface physique coïncident généralement et une concentration basée lignes est supprimée.

15. Structure de réseau pour intégrer des systèmes de communication TDM dans un réseau IP, un système de communication TDM comportant un système interne de distribution de messages (MBD), un réseau de couplage (SN), plusieurs dispositifs internes de communication (PE, CP) ainsi que des dispositifs périphériques avec des interfaces TDM (PE-TERM) et des dispositifs périphériques avec une fonctionnalité de terminaison de protocole (PE-PRH), **caractérisée en ce qu'**est prévue au moins une plate-forme d'ordinateur (COPL) qui comporte respectivement au moins une interface IP et au moins une interface TDM, **en ce que** la plate-forme d'ordinateur (COPL) est connectée via respectivement au moins un dispositif périphérique (PE-TERM) au système de communication TDM, **en ce qu'**un ou plusieurs dispositifs périphériques avec fonctionnalité de terminaison de protocole (PE-PRH) sont réalisés de manière telle qu'ils réunissent des messages envoyés des dispositifs internes de communication (PE, CP) vers une plate-forme d'ordinateur (COPL) en utilisant le système interne de distribution de messages (MBD) et les insèrent dans des canaux de messages, en que un ou plusieurs dispositifs périphériques avec des interfaces TDM (PE-TERM) sont réalisés de manière telle qu'ils réunissent les canaux de messages de plusieurs dispositifs périphériques avec fonctionnalité de terminaison de protocole (PE-PRH) en utilisant le réseau de couplage (SN) et **en ce qu'**au moins un dispositif périphérique (PE-TERM) est réalisé de manière telle qu'il amène les canaux de messages ainsi réunis à l'une des plate-formes d'ordinateurs (COPL) qui terminent ceux-ci.
